(19) Europäisches Patentamt
European Patent Office
Office européen des brevets

(11) Veröffentlichungsnummer : **0 087 037**
**B1**

(12) # EUROPÄISCHE PATENTSCHRIFT

(45) Veröffentlichungstag der Patentschrift : **16.04.86**

(51) Int. Cl.⁴ : **C 09 B 29/045**// D06P1/04

(21) Anmeldenummer : **83101110.1**

(22) Anmeldetag : **07.02.83**

(54) **Azofarbstoffe.**

(30) Priorität : **19.02.82 DE 3206092**

(43) Veröffentlichungstag der Anmeldung : **31.08.83 Patentblatt 83/35**

(45) Bekanntmachung des Hinweises auf die Patenterteilung : **16.04.86 Patentblatt 86/16**

(84) Benannte Vertragsstaaten : **CH DE FR GB IT LI**

(56) Entgegenhaltungen :
**FR-A- 1 434 148**
**FR-A- 1 574 372**
**FR-E- 93 514**
**JP-A-41 022 192**
**US-A- 3 492 078**
**CHEMICAL ABSTRACTS, Band 80, Nr. 24, 17. Juni 1974, Seite 85, Nr. 134888f, Columbus, Ohio, USA K. NISHIDA et al.: "Dyeing properties of monoazo dyes derived from 5-nitro-2-aminobenzothiazole 3-N-oxide on various synthetic polymer fibers"**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Hamprecht, Rainer, Dr.**
**Im Kerberich 25**
**D-5068 Odenthal (DE)**

**EP 0 087 037 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind Azofarbstoffe der Formel

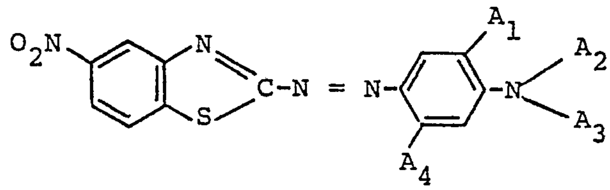

(I)

worin

$A_1$ für R, —OR oder Halogen,

$A_2$ und $A_3$ unabhängig voneinander für R und

$A_4$ für R, —OR, Halogen, $CF_3$, $NHCO_2R$, NHCOR, $NHSO_2R$ oder NHCONHR

und

R unabhängig voneinander für Wasserstoff, Alkyl, Alkenyl, Cycloalkyl, Aryl oder Aralkyl stehen, wobei vorstehend im beliebigen Zusammenhang genanntes Alkyl 1-8 C-Atome aufweist und durch Halogen, Aryl, Alkoxy, Aryloxy, Aralkyl, OH, CN, —$CO_2$-Alkyl, $CF_3$, —OCONH-Alkyl, —OCO-Alkyl, —CO-Alkyl, —CO-Aryl, —O—CO-Aryl oder O—COO-Alkyl weitersubstituiert sein kann; Aryl gegebenenfalls durch $C_1$-$C_4$-Alkyl, Halogen oder —O—$C_1$-$C_4$-Alkyl substituiertes Phenyl und Halogen F, Br und Cl bedeuten und wobei der Farbstoff mit einer Dimethylanilin-Kupplungskomponente ausgenommen ist.

Bevorzugte Farbstoffe sind solche der Formel I, worin

$A_1$ für H, Halogen, Alkyl oder Alkoxy

$A_2$ für H, $C_1$-$C_6$-Alkenyl oder gegebenenfalls durch OH, Halogen, CN, —$CO_2$-Alkyl, Aryl, —O-Alkyl, —O-Aryl, —OCO-Alkyl, —OCO—NH-Alkyl oder —$OCO_2$-Alkyl substituiertes Alkyl,

$A_3$ für gleiches oder verschiedenes $A_2$ oder Aryl und

$A_4$ für H, Alkyl, —O-Alkyl, Halogen, $CF_3$ oder NHCO-Alkyl stehen, wobei «Alkyl», «Aryl» und «Halogen» die vorstehend genannten Bedeutungen haben.

Besonders bevorzugte Farbstoffe sind schließlich solche

$A_1$ H oder Cl,

$A_2$ H, $C_1$-$C_8$-Alkyl, Cyanethyl, Benzyl, Tolylmethyl, Phenethyl, $C_1$-$C_4$-Alkoxy-$C_2$-$C_4$-alkyl- oder $C_1$-$C_4$-Alkylcarbonyloxy-$C_1$-$C_4$-alkyl-,

$A_3$ gleiches oder verschiedenes $A_2$ und

$A_4$ H, Methyl, Methoxy oder $NHCOC_1$-$C_4$-Alkyl bedeuten.

Sperrige Reste, wie z. B. tert.-Butyl, finden sich in solchen Positionen, wo sie keine sterische Hinderung bewirken. Geeignetes Cycloalkyl ist z. B. Cyclohexyl. Geeignetes Aralkyl ist Benzyl oder Phenylethyl. Geeignetes Alkenyl ist Allyl oder Butenyl. Geeignetes Alkylen ist Ethylen. Geeignetes Alkoxy — sofern nicht anders definiert — ist Methoxy und Ethoxy. Besonders bevorzugtes Alkyl ist $C_1$-$C_4$-Alkyl.

Während die isomeren 6-Nitrobenzthiazolylazoverbindungen in großer Zahl durch die einschlägige Literatur vorbeschrieben sind und auch als Handelsprodukte technische Nutzung gefunden haben, sind Azofarbstoffe mit einer 5-Nitrobenzthiazolyl-Diazokomponente nur ganz vereinzelt, beinahe «zufällig» in sehr wenigen Patentpublikationen erwähnt worden (vgl. FR-PS 1 530 734 und 1 574 372, DE-OS 2 640 624 sowie «Revue Romaine de Chimie» 21, 595 (1976).

Es wurde nun gefunden, daß die Farbstoffe der Formel I einige bemerkenswerte anwendungstechnische Eigenschaften aufweisen.

So zeichnen sich die neuen Dispersionsfarbstoffe durch Klarheit und hohe Färbestärke aus. Sie färben Celluloseester und Polyester in roten bis violetten Farbtönen, wobei gute Allgemeinechtheiten erzielt werden.

Die erfindungsgemäßen Farbstoffe unterscheiden sich deutlich von den bislang im technischen Maßstab ausschließlich benutzten 6-Nitro-Isomeren, auch wenn diese herstellungsbedingt, d. h. unbeabsichtigt, geringe Mengen an dem entsprechenden 5-Nitro-Farbstoff enthalten.

Gegenstand der Erfindung sind deshalb auch Farbstoffpräparate, deren Rein-Farbstoffanteil weniger als 5, vorzugsweise weniger als 10 Gew.-% 6-Nitro-Isomeres enthält.

Die neuen Farbstoffe der Formel I erhält man z. B. dadurch, daß man diazotiertes 2-Amino-2-nitrobenzthiazol mit Kupplungskomponenten der Formel

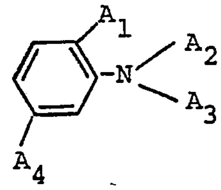

in an sich bekannter Weise kuppelt.

2-Amino-5-nitro-benzthiazol ist — wie oben bereits erwähnt — bekannt und beispielsweise durch Umsetzung von 5-Nitrobenzthiazol mit Hydroxylamin erhältlich (vgl. Zhur. obshchei. Khim. 30, 1363 (1960) = Chem. Abstr 55,·515c (1961)).

## Beispiel 1

Darstellung des Farbstoffs der Formel

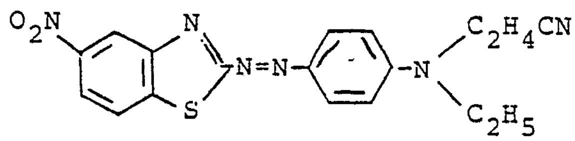

5,65 g 2-Amino-5-nitro-benzothiazol werden in 40 ml o-Phosphorsäure und 20 ml Eisessig bei 0 °C suspendiert. Man tropfte 5 ml 40-proz. Nitrosylschwefelsäure in 30 Minuten bei 0 °C zu und rührte noch weitere 4 Stunden bei 0 °C. Man fügte die Diazotierung bei 0 °C unter Eiszusatz zu einer Lösung von 5.57 g N-Ethyl-N-cyanethylanilin in 100 ml Eisessig und 5 ml 10-proz. wäßriger Amidosulfonsäurelösung. Nach Rühren über Nacht bei Raumtemperatur wurde abgesaugt, mit Wasser gewaschen und bei 60 °C getrocknet.

Der Farbstoff färbt Polyester in klarem Scharlach, Colour Index Hue Indication Chart Nr. 8 mit sehr guter Licht- und Sublimierechtheit $\lambda_{max}$ = 508 nm.

Bei analoger oder ähnlicher Arbeitsweise können die in nachfolgender Tabelle aufgeführten Farbstoffe in guter Ausbeute erhalten werden :

Farbstoffe der Formel

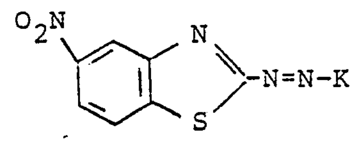

| Beispiel Nr. | K | Colour Index Hue Indication Chart Nr. | $\lambda_{max}$ [nm] | Nuance |
|---|---|---|---|---|
| 2 | 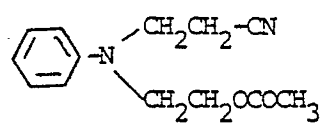 | 7 | 500 | bright yellowish Red |
| 3 | 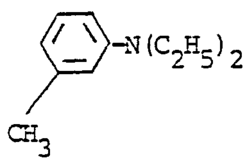 | 51 | 535 | bluish Pink |
| 4 | 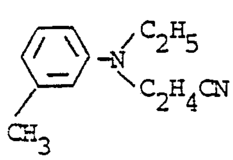 | 8 | 518 | bright Red |
| 5 | 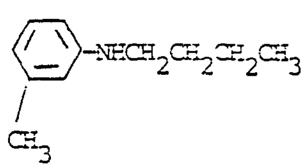 | 8 | 518 | bright Red |

(Fortsetzung)

| Beispiel Nr. | K | Colour Index Hue Indication Chart Nr. | $\lambda_{max}$ [nm] | Nuance |
|---|---|---|---|---|
| 6 | 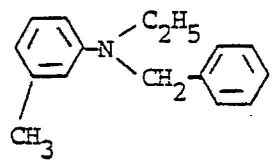 | 50 | 530 | bluish Pink |
| 7 | 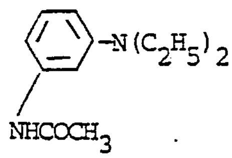 | 10 | 540 | bright reddish violet |
| 8 | 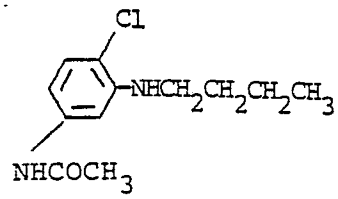 | 8 | 520 | bright red |
| 9 | 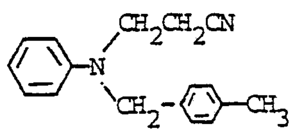 | 7 | | bright yellowisn Red |
| 10 | 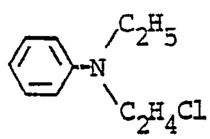 | 49 | | Pink |
| 11 | 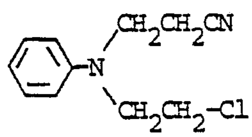 | 7 | | bright yellowish Red |
| 12 | 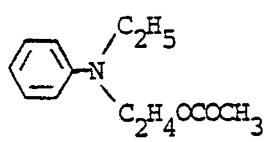 | 7 | | bright yellowish Red |
| 13 | 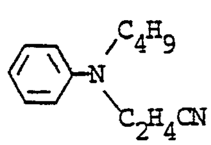 | 8 | | bright Red |
| 14 | 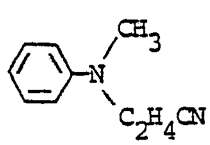 | 8 | | bright Red |

(Fortsetzung)

| Beispiel Nr. | K | Colour Index Hue Indication Chart Nr. | Nuance |
|---|---|---|---|
| 15 | 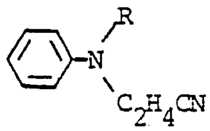 R = 1/3 $CH_3$, 1/3 $C_2H_5$, 1/3 $C_4H_9$ | 8 | bright Red |
| 16 | 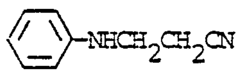 | 7 | bright yellowish Red |
| 17 | 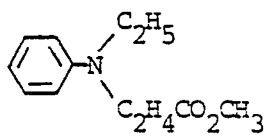 | 7 | bright yellowish Red |
| 18 | 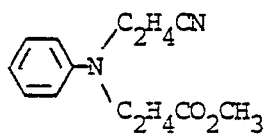 | 7 | bright yellowish Red |
| 19 | 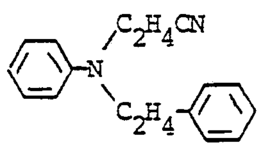 | 7 | bright yellowish Red |
| 20 | 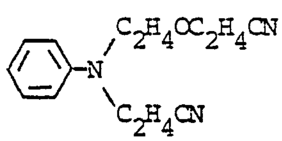 | 8 | bright Red |
| 21 | 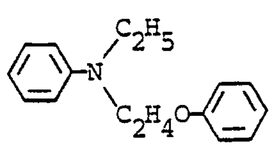 | 8 | bright Red |
| 22 | 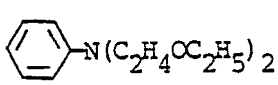 | 8 | bright Red |
| 23 | 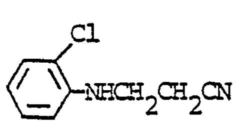 | 7 | bright Red |

(Fortsetzung)

| Beispiel Nr. | K | Colour Index Hue Indication Chart Nr. | Nuance |
|---|---|---|---|
| 24 | 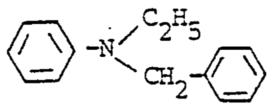 | 7 | bright Red |
| 25 | 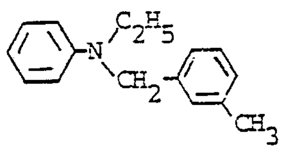 | 7 | bright Red |
| 26 | 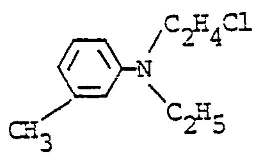 | 50 | bluish Pink |
| 27 | 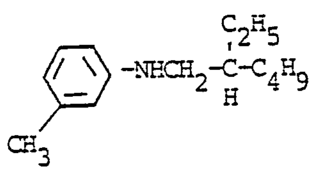 | 7 | bright yellowish Red |
| 28 | 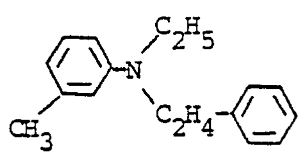 | 50 | bluish Pink |
| 29 | 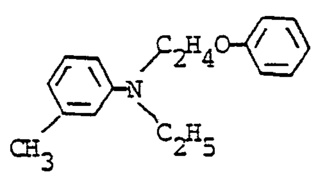 | 50 | bluish Pink |
| 30 | 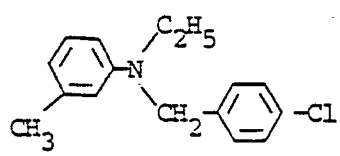 | 50 | bluish Pink |
| 31 | 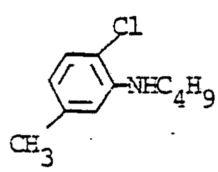 | 7 | bright yellowish Red |
| 32 | 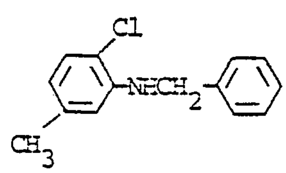 | 7 | bright yellowish Red |

(Fortsetzung)

| Beispiel Nr. | K | Colour Index Hue Indication Chart Nr. | Nuance |
|---|---|---|---|
| 33 | 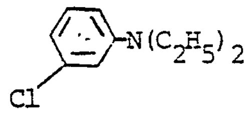 | 8 | Red |
| 34 | 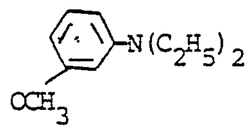 | 8 | Red |
| 35 | 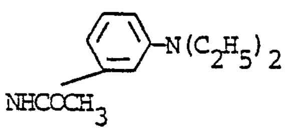 / 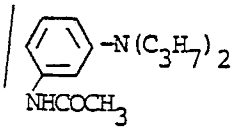 | 10 | bright reddish violet |
| 36 | 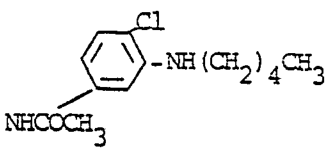 | 8 | bright Red |
| 37 | 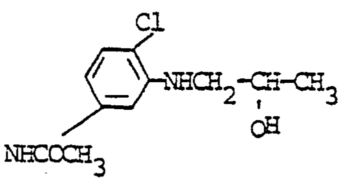 | 8 | Red |
| 38 | 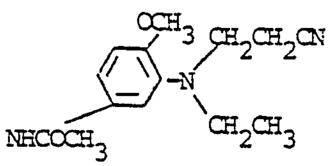 | 11 | Violet |
| 39 | 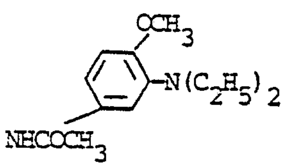 | 11 | Violet |
| 40 | 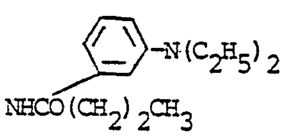 | 10 | bright reddish Violet |
| 41 | 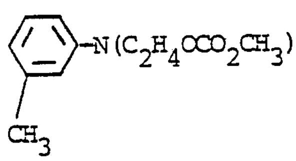 | 8 | Red |

(Fortsetzung)

| Beispiel Nr. | K | Colour Index Hue Indication Chart Nr. | Nuance |
|---|---|---|---|
| 42 | 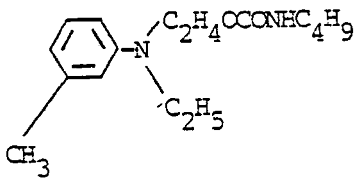 | 8 | Red |
| 43 | 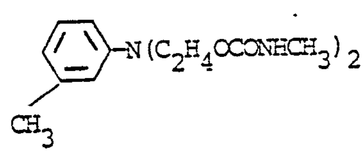 | 8 | Red |
| 44 | 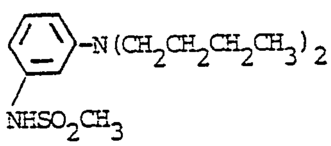 | 51 | bluish Pink |
| 45 | 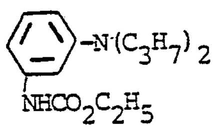 | 51 | bluish Pink |
| 46 | 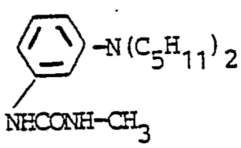 | 10 | bluish Red |
| 47 | 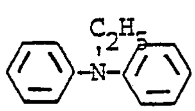 | 8 | Red |

**Patentansprüche**

1. Azofarbstoffe der Formel

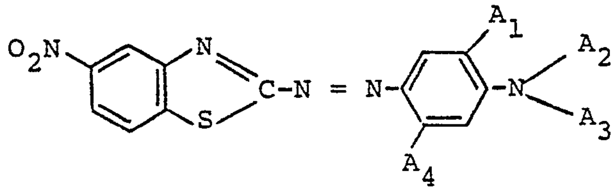

(I)

worin
$A_1$ für R, —OR oder Halogen,
$A_2$ und $A_3$ unabhängig voneinander für R und
$A_4$ für R, —OR, Halogen, $CF_3$, $NHCO_2R$, NHCOR, $NHSO_2R$ oder NHCONHR
und
R unabhängig voneinander für Wasserstoff, Alkyl, Alkenyl, Cycloalkyl, Aryl oder Aralkyl stehen,

wobei vorstehend im beliebigen Zusammenhang genanntes Alkyl 1-8 C-Atome aufweist und durch Halogen, Aryl, Alkoxy, Aryloxy, Aralkyl, OH, CN, —$CO_2$-Alkyl, $CF_3$, —OCONH-Alkyl, —OCO-Alkyl, —CO-Alkyl, —CO-Aryl, —O—CO-Aryl oder O—COO-Alkyl weitersubstituiert sein kann ; Aryl gegebenenfalls durch $C_1$-$C_4$-Alkyl, Halogen oder —O—$C_1$-$C_4$-Alkyl substituiertes Phenyl und Halogen F, Br und Cl bedeuten und wobei der Farbstoff mit einer Dimethylanilin-Kupplungskomponente ausgenommen ist.

2. Azofarbstoffe gemäß Anspruch 1, dadurch gekennzeichnet, daß

$A_1$ für H, Halogen, Alkyl oder Alkoxy,

$A_2$ für H, $C_1$-$C_6$-Alkenyl oder ggf. durch OH, Halogen, CN, —$CO_2$-Alkyl, Aryl, —O-Alkyl, —O-Aryl, —OCO-Alkyl, —OCO—NH-Alkyl oder $OCO_2$-Alkyl substituiertes Alkyl,

$A_3$ für gleiches oder verschiedenes $A_2$ oder Aryl und

$A_4$ für H, Alkyl, —O-Alkyl, Halogen, $CF_3$ oder NHCO-Alkyl stehen, wobei « Alkyl », « Aryl » und « Halogen » die in Anspruch 1 genannte Bedeutung haben.

3. Azofarbstoffe gemäß Anspruch 1, dadurch gekennzeichnet, daß

$A_1$ H oder Cl,

$A_2$ H, $C_1$-$C_8$-Alkyl, Cyanethyl, Benzyl, Tolylmethyl, Phenethyl, $C_1$-$C_4$-Alkoxy-$C_2$-$C_4$-alkyl- oder $C_1$-$C_4$-Alkyl-carbonyloxy-$C_1$-$C_4$-alkyl-,

$A_3$ gleiches oder verschiedenes $A_2$ und

$A_4$ H, Methyl, Methoxy oder NH—$COC_1$-$C_4$-Alkyl bedeuten.

4. Farbstoffpräparate, deren Rein-Farbstoffanteil weniger als 5, vorzugsweise weniger als 10 Gew.-% an 6-Nitro-Isomeren der Farbstoffe gemäß Anspruch 1 enthält.

5. Verfahren zum Färben von Celluloseester und Polyester, dardurch gekennzeichnet, daß man Farbstoffe oder Farbstoffpräparate gemäß Anspruch 1 bzw. 4 verwendet.

## Claims

1. Azo dyestuffs of the formula

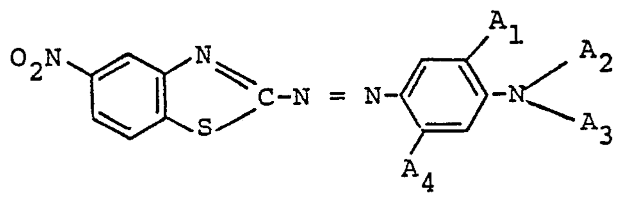

(I)

wherein

$A_1$ represents R, —OR or halogen,

$A_2$ and $A_3$, independently of one another, represent R and

$A_4$ represents R, —OR, halogen, $CF_3$, $NHCO_2R$, NHCOR, $NHSO_2R$ or NHCONHR,

and

R independently of one another represent hydrogen, alkyl, alkenyl, cycloalkyl, aryl or aralkyl, wherein alkyl mentioned above in any connection has 1-8 C atoms and can be further substituted by halogen, aryl, alkoxy, aryloxy, aralkyl, OH, CN, —$CO_2$-alkyl, $CF_3$, —OCONH-alkyl, —OCO-alkyl, —CO-alkyl, —CO-aryl, —O—CO-aryl or O—COO-alkyl ; aryl denotes phenyl optionally substituted by $C_1$-$C_4$-alkyl, halogen or —O—$C_1$-$C_4$-alkyl and halogen denotes F, Br and Cl, with the exception of the dyestuff containing a dimethylaniline coupling component.

2. Azo dyestuffs according to Claim 1, characterised in that

$A_1$ represents H, halogen, alkyl or alkoxy,

$A_2$ represents H, $C_1$-$C_6$-alkenyl or alkyl optionally substituted by OH, halogen, CN, —$CO_2$-alkyl, aryl, —O-alkyl, —O-aryl, —OCO-alkyl, —OCO—NH-alkyl or $OCO_2$-alkyl,

$A_3$ represents identical or different $A_2$ or aryl and

$A_4$ represents H, alkyl, —O-alkyl, halogen, $CF_3$ or NHCO-alkyl, « alkyl », « aryl » and « halogen » having the meaning given in Claim 1.

3. Azo dyestuffs according to Claim 1, characterised in that

$A_1$ denotes H or Cl,

$A_2$ denotes H, $C_1$-$C_8$-alkyl, cyanoethyl, benzyl, tolylmethyl, phenethyl, $C_1$-$C_4$-alkyl-$C_2$-$C_4$-alkyl or $C_1$-$C_4$-alkyl-carbonyloxy-$C_1$-$C_4$-alkyl-,

$A_3$ denotes identical or different $A_2$ and

$A_4$ denotes H, methyl, methoxy or NH—$COC_1$-$C_4$-alkyl.

4. Dyestuff preparations, the pure dyestuff component of which contains less than 5, preferably less than 10 % by weight of 6-nitro isomers of the dyestuffs according to Claim 1.

5. Process for dyeing cellulose ester and polyester, characterised in that dyestuffs or dyestuff preparations according to Claim 1 or 4 are used.

## Revendications

1. Colorants azoïques de formule

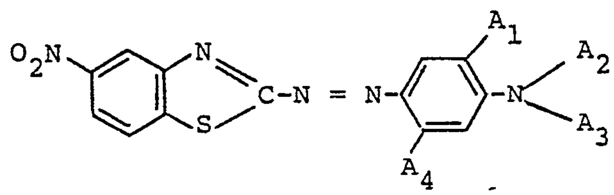

(I)

dans laquelle

$A_1$ représente R, —OR ou un halogène,

$A_2$ et $A_3$ représentent indépendamment l'un de l'autre R et

$A_4$ représente R, un groupe —OR, un halogène, un groupe $CF_3$, $NHCO_2R$, NHCOR, $NHSO_2R$ ou NHCONHR

et

les groupes R représentent indépendamment les uns des autres l'hydrogène, un groupe alkyle, alcényle, cycloalkyle, aryle ou aralkyle, un groupe alkyle mentionné ci-dessus sous un rapport quelconque présentant 1 à 8 atomes de carbone et pouvant encore être substitué par un radical halogéno, aryle, alkoxy, aryloxy, aralkyle, OH, CN, —$CO_2$-alkyle, $CF_3$, —OCONH-alkyle, —OCO-alkyle, —CO-alkyle, —CO-aryle, —O—CO-aryle ou O—COO-alkyle ; aryle désigne un groupe phényle éventuellement substitué par un radical alkyle en $C_1$ à $C_4$, halogéno ou —O-alkyle en $C_1$ à $C_4$ et halogène désigne F, Br et Cl et le colorant à copulant diméthylaniline est exclu.

2. Colorants azoïques selon la revendication 1, caractérisés en ce que

$A_1$ désigne H, un halogène, un groupe alkyle ou alkoxy,

$A_2$ représente H, un groupe alcényle en $C_1$ à $C_6$ ou un groupe alkyle éventuellement substitué par un radical OH, halogéno, CN, —$CO_2$-alkyle, aryle, —O-alkyle, —O-aryle, —OCO-alkyle, —OCO—NH-alkyle ou $OCO_2$-alkyle,

$A_3$ représente un groupe $A_2$ identique ou différent ou un groupe aryle, et

$A_4$ représente H, un groupe alkyle, —O-alkyle, un halogène, un groupe $CF_3$ ou NHCO-alkyle, les termes « alkyle », « aryle » et « halogène » ayant la définition indiquée dans la revendication 1.

3. Colorants azoïques suivant la revendication 1, caractérisés en ce que

$A_1$ représente H ou Cl,

$A_2$ représente H, un groupe alkyle en $C_1$ à $C_8$, cyanéthyle, benzyle, tolylméthyle, phénéthyle, (alkoxy en $C_1$ à $C_4$)-alkyle en $C_2$ à $C_4$ ou (alkyle en $C_1$ à $C_4$)-carbonyloxy-(alkyle en $C_1$ à $C_4$),

$A_3$ est un groupe $A_2$ identique ou différent et

$A_4$ représente H, un groupe méthyle, méthoxy ou HN—CO-(alkyle en $C_1$ à $C_4$).

4. Préparations tinctoriales dont la partie formée purement du colorant contient moins de 5, de préférence moins de 10 % en poids d'isomère 6-nitro des colorants suivant la revendication 1.

5. Procédé de teinture d'esters cellulosiques et de polyesters, caractérisé en ce qu'on utilise des colorants ou des préparations tinctoriales suivant la revendication 1 ou 4.